# FASCICULE DE BREVET EUROPEEN

(11) **EP 2 394 492 B1**
(45) Date de publication et mention de la délivrance du brevet: **01.05.2013**
(21) Numéro de dépôt: 10707072.4
(22) Date de dépôt: 05.02.2010
(51) Int. Cl.: H05B 6/02, B29C 65/36

(54) **MEMBRANE SOUPLE POUR LA REALISATION DE PIECES EN MATERIAUX COMPOSITES**
WEICHE MEMBRAN ZUR HERSTELLUNG VON GÜTERN VERSEHEN MIT VERBUNDMATERIALIEN
SOUPLE MEMBRANE FOR MANUFACTURING OF ITEMS MADE OF COMPOUND MATERIALS

(30) Priorité: 09.02.2009 FR 0900550
(43) Date de publication de la demande: 14.12.2011
(73) Titulaire: Université du Havre, F-76063 Le Havre Cedex (FR)
(72) Inventeur: GUERET, Sébastien, F-76600 Le Havre (FR); BREARD, Joël, F-14750 Saint Aubin sur Mer (FR)
(74) Mandataire: Novagraaf Technologies
(86) Numéro de dépôt international: PCT/FR2010/000085
(87) Numéro de publication internationale: WO 2010/089479

(56) Documents cités:
- US-A- 5 530 227

## Description

### DOMAINE TECHNIQUE DE L'INVENTION

L'invention se rapporte à une membrane déformable pour la réalisation de pièces en matériau composite, ainsi qu'à un dispositif de moulage utilisant une telle membrane déformable.

### ETAT DE LA TECHNIQUE ANTERIEURE

Les matériaux composites sont constitués d'au moins deux composants non miscibles assemblés. Ils présentent des propriétés que les différents composants qui le constituent ne possèdent pas séparément C'est pourquoi les matériaux composites sont de plus en plus utilisés, dans tout genre d'industries, comme par exemple dans l'aéronautique.

Une des principales préoccupations en terme de matériaux composites consiste à mettre en place des dispositifs et des procédés permettant de réaliser des matériaux composites de toutes tailles et de toutes formes à faible coût.

Pour cela, on connaît par exemple le document FR2890588 qui décrit un dispositif de transformation des matériaux composites utilisant deux corps de moules rigides mobiles l'un par rapport à l'autre, chaque corps de moule comportant un demi inducteur solidaire du corps de moule et permettant de chauffer le matériau composite. Ce dispositif est avantageux car il permet de diminuer les temps de chauffe et de refroidissement. Cependant, il implique de lourds investissements dans l'outillage car les deux corps de moules sont spécifiques à une forme de matériau composite. Par ailleurs, la maintenance des deux corps de moule est lourde et coûteuse.

Afin de limiter les investissements, le document FR2882683 propose d'utiliser un dispositif comportant un moule rigide et une membrane jouant le rôle de contre moule, un système de chauffage par induction étant intégré au moule rigide. Dans ce document, le procédé utilisé est le suivant :
- on chauffe le pré-imprégné jusqu'à la température de fusion du thermoplastique ;
- on comprime par la mise sous vide ;
- on refroidit le dispositif complet.

Cependant ce procédé nécessite l'utilisation de moule rigide intégrant directement des spires inductives conçues spécifiquement pour une structure précise, ce qui entraîne encore une fois des investissements importants pour une forme de matériau composite spécifique.

### EXPOSE DE L'INVENTION

L'invention vise à remédier aux inconvénients de l'état de la technique en proposant un dispositif pour la mise en forme de matériau composite qui ne nécessite pas d'investissements coûteux, qui soit facile d'entretien, qui soit adapté à une grande variété de forme et de taille de matériaux composites, qui permette l'utilisation de renfort de type pré-imprégné, semi-imprégné ou sec, qui permette de contrôler les émanations de vapeur toxiques, qui permette de fabriquer des pièces composites présentant des caractéristiques structurales importantes sans nécessiter l'utilisation de presse, d'autoclave ou d'étuve.

Plus précisément, l'invention concerne un dispositif de moulage pour la réalisation de pièces en matériau composite comportant:
- une membrane déformable;
- une partie rigide;
- un moyen d'aspiration permettant d'appliquer une dépression entre la membrane et la partie rigide,
le dispositif de moulage étant remarquable en ce que :
- la membrane déformable comporte au moins un inducteur, l'inducteur étant relié à un boîtier d'alimentation ;
- la partie rigide est au moins partiellement conductrice électriquement.

Sous l'effet du boîtier d'alimentation, qui comporte un générateur et qui produit un courant alternatif, l'inducteur produit un champ magnétique variable. Lors du placement de la membrane sur la partie rigide et de sa mise en fonctionnement, des courants de Foucault puissants se forment directement dans une partie de la membrane et de la partie rigide qui chauffe alors très rapidement. Cette création de chaleur dans la partie rigide permet une montée en température très rapide par conduction du matériau, ainsi qu'un rendement optimal par rapport aux autres moyens plus conventionnels tels que les résistances chauffantes.

Dans le même temps, la membrane, qui est souple, est plaquée contre la pièce en matériau composite et contre la partie rigide grâce au vide, et de cette manière, la pièce en matériau composite est comprimée entre la membrane et la pièce rigide. Cela permet d'avoir une pièce composite finie ayant un taux de renfort important. Cette étape de compression peut être améliorée en y associant une pression extérieure de type autoclave.

Le chauffage par conduction permet à la pièce d'atteindre très rapidement sa température de fusion, et de la refroidir très rapidement par la suite, ce qui permet de réduire les temps de cycle lors de la fabrication de la pièce et donc d'obtenir des gains de productivité. Mais cette augmentation de la vitesse de chauffage permet également de ne pas placer la membrane chauffante à une température élevée pendant trop longtemps afin de ne pas la détériorer.

Ce procédé de chauffage est réellement avantageux car il permet de chauffer efficacement, et de manière homogène, la pièce en matériau composite, quelle que soit sa forme. En effet, l'inducteur n'est plus conformé pour une géométrie de pièce donnée, mais il s'adapte à la forme de la pièce en matériau composite puisque la membrane, et l'inducteur qu'elle contient, se déforment pour épouser la forme de la partie rigide.

Par ailleurs, ce procédé de chauffage est très efficace, car il permet de ne chauffer que la surface de la partie rigide qui est disposée à faible distance de la membrane. On notera également que ce dispositif est très économique et de mise en oeuvre très simple car la membrane déformable est facile à fabriquer et la partie rigide ne comporte aucun système de chauffage.

En outre, ce dispositif de moulage avec son organe d'aspiration et son cycle de température rapide permet de contrôler les émanations de vapeurs toxiques provenant de produits chimiques situés dans la résine et/ou les renforts lors du chauffage grâce à la membrane assurant une étanchéité vis-à-vis de l'environnement extérieur. En effet, ces vapeurs toxiques sont aspirées par le moyen d'aspiration et peuvent être traitées avant d'être rejetées dans l'atmosphère. Ainsi, vis-à-vis de l'environnement et de l'utilisateur, le dispositif de moulage selon l'invention favorise les conditions d'hygiène et de sécurité, notamment en matière d'émissions de composés organiques volatiles par exemple.

Avantageusement, l'inducteur est constitué d'au moins une bobine inductrice.

Selon différents modes de réalisation :
- L'inducteur est réalisé dans un métal dont la résistivité électrique est comprise entre 10⁻⁸ et 10⁻¹ W.m. Dans ce cas, l'inducteur est de préférence constitué d'un ou de plusieurs fils minces, par exemple de cuivre à haute conductibilité, qui sont intégrés dans le corps de la membrane. Ce mode de réalisation est très simple à fabriquer, peu coûteux et efficace puisque le ou les fils de cuivre ne nuisent pas à la souplesse de la membrane ;
- L'inducteur est constitué par des conduits souples dans lesquels circule un fluide conducteur électrique électriquement. Dans ce mode de réalisation, les conduits peuvent être creusés directement dans le corps de la membrane et le fluide conducteur électriquement, qui est par exemple un ferrofluide, est injecté dans ces conduits. De cette façon, la membrane est encore plus souple que dans le mode de réalisation précédent, ce qui lui permet de mieux épouser les formes de la partie rigide.

Avantageusement la membrane est réalisée dans un des matériaux pris dans le groupe suivant: silicone, nylon, polyuréthane, composite à matrice epoxyde. Ces matériaux permettent à la membrane d'être suffisamment flexible pour pouvoir épouser tout type de forme, tout en étant suffisamment résistante pour pouvoir comprimer la pièce en matériau composite à mouler, et ce, même à la température de fusion de cette pièce.

Selon différents modes de réalisation :
- la membrane est développable ou non développable et l'inducteur forme une spirale comprise dans l'épaisseur de la membrane ;
- la membrane est un solide de géométrie quelconque (solide de révolution, solide convexe, solide concave...) et l'inducteur forme un solénoïde, ce qui permet d'une part d'avoir un meilleur rendement de chauffe et d'autre part de réaliser des corps creux. Dans ce cas, la membrane tubulaire peut être placée dans la cavité de la pièce à réaliser, tandis que la partie rigide est placée autour de la pièce, ou selon un mode de réalisation plus efficace, la partie rigide peut être placée dans la cavité, tandis que la membrane est placée autour de la pièce.

Selon un mode de réalisation préférentiel, la membrane est élastique, ce qui lui permet de mieux épouser la forme de la partie rigide, en particulier lors de la réalisation des corps creux.

Selon un mode de réalisation particulier de l'invention, la membrane comporte en outre des particules conductrices électriquement, ce qui permet à la membrane de chauffer également. De cette manière, le chauffage de la pièce en matériau composite est plus homogène, mais dans le même temps, la membrane est directement chauffée et donc on peut travailler à des températures de fusion moins élevées.

Avantageusement, la membrane comporte en outre des moyens de refroidissement afin de diminuer encore les temps de refroidissement de la pièce à mettre en forme. Ces moyens de refroidissement peuvent être des canaux creusés dans le corps de la membrane et dans lesquels circule un fluide de refroidissement, par exemple de l'eau. La partie rigide peut également comporter des conduits dans lesquels circule un fluide de refroidissement. Le dispositif de moulage selon l'invention peut également comporter un dispositif de refroidissement additionnel qui injecte un jet d'air, par exemple sur le dessus et le dessous du dispositif, abaissant rapidement la température du composite par convection. Il est tout à fait envisageable de coupler ces dispositifs de refroidissement afin d'obtenir une chute de température encore plus rapide.

Dans un mode préféré de réalisation de l'invention, seule la surface de la partie rigide est conductrice électriquement. De cette façon, seule la surface de la partie rigide est chauffée ce qui évite de chauffer inutilement le corps de la partie rigide et donc ce qui diminue l'inertie thermique.

Avantageusement, la partie rigide comporte une couche isolante thermiquement disposée sous la surface de la partie rigide qui est conductrice électriquement, afin d'augmenter l'efficacité du dispositif de chauffage et les déperditions, de chaleur.

Selon différents modes de réalisation :
- La partie rigide est constituée d'un matériau conducteur électriquement,
- La partie rigide est revêtue d'un matériau conducteur électriquement,
- la partie rigide est constituée d'un matériau magnétique,
- la partie rigide est revêtue d'un matériau magnétique.

L'utilisation d'un matériau magnétique permet d'augmenter l'efficacité du chauffage.

Avantageusement, le dispositif de moulage selon l'invention comporte en outre des moyens d'étanchéité permettant de garantir l'étanchéité entre la membrane et la partie rigide lorsque le moyen d'aspiration applique une dépression entre la membrane et la partie rigide, de sorte que la membrane se plaque bien contre la partie rigide.

Avantageusement, le dispositif de moulage selon l'invention comporte des thermocouples permettant de mesurer la température du matériau composite et un circuit d'asservissement de la fréquence de boîtier d'alimentation en fonction de la température de matériau composite.

Avantageusement, le dispositif selon l'invention comporte des moyens pour appliquer des mouvements vibratoires à l'un au moins de ses constituants.

Le dispositif de moulage selon l'invention est particulièrement adapté pour la mise en forme des résines thermoplastiques, ou thermodurcissables synthétiques et/ou naturelles renforcées par des fibres synthétiques et/ou naturelles telles que le lin ou le chanvre. L'invention s'adapte tout particulièrement à la mise en oeuvre de ces composites naturels puisque le contrôle de la température de chauffage est optimal.

L'invention peut par exemple être utilisée pour mettre en oeuvre le procédé décrit dans le document FR2882682.

Selon un deuxième aspect, l'invention concerne un procédé de moulage d'une pièce en matériau composite mettant en oeuvre le dispositif de moulage selon l'un quelconque des modes de réalisation précédents, le procédé comportants les étapes suivantes :
- introduire un renfort et une matrice constituant le matériau composite dans le dispositif de moulage dans l'espace compris entre la partie rigide et la membrane souple,
- appliquer une dépression entre la membrane et la partie rigide,
- appliquer un cycle de mise en oeuvre consistant à alimenter l'inducteur grâce au boîtier d'alimentation par un courant électrique contrôlé en fréquence et en puissance.

Le procédé de réalisation d'un matériau composite selon l'invention est particulièrement avantageux car il consiste à optimiser la température dans le matériau composée grâce à un contrôle précis de la fréquence et de la puissance appliquées à l'inducteur afin de contrôler les propriétés du matériau composite obtenu. Dans le procédé de moulage selon l'invention, le contrôle en température est réalisé grâce au contrôle de la fréquence appliquée à l'inducteur. Le contrôle de cette fréquence permet de contrôler les zones chauffés : en effet, une fréquence très élevée permet de ne chauffer que les fibres du composite, dans le cas où elles sont conductrices, et donc n'avoir une très faible inertie thermique. Une fréquence plus faible permet de chauffer également la partie rigide et donc d'avoir une inertie thermique plus importante. Le contrôle de la puissance du courant permet de contrôler la température du composite. Ainsi, les propriétés voulues du matériau composite sont obtenues par contrôle de la température dans le matériau composite, tandis que dans les procédés de l'art antérieur, elles étaient obtenues par un contrôle de la pression ou du débit appliquer aux constituants du matériau composite. Par exemple, dans le procédé selon l'invention, le taux de défaut dans le matériau composite pourra être contrôler grâce à la fréquence et la puissance du courant électrique appliqué à l'inducteur.

Avantageusement, le procédé comporte en outre une ou plusieurs des étapes suivantes :
- une étape consistant à faire évoluer la pression entre la membrane et la partie rigide pendant le cycle de mise en oeuvre ;
- une étape consistant à appliquer une contrainte variable sur la membranes pendant le cycle de mise en oeuvre ;
- une étape de refroidissement du matériau composite variable en température.

Avantageusement, la fréquence du courant électrique varie pendant le cycle de mise en oeuvre.

Avantageusement, le procédé permet de mettre en oeuvre un matériau composite comportant des fibres en matériau conducteur électriquement. Ainsi lors de la mise en place de la membrane sur le matériau composite et de sa mise en fonctionnement, des courants de Foucault puissants se forment directement dans les fibres conductrices électriquement. Les fibres sont alors chauffées directement

Avantageusement, le procédé comporte :
- une étape d'augmentation de la puissance pour assurer une montée en température ;
- une étape de maintien de la puissance pour assurer une température constante ;
- une étape de diminution de la puissance pour assurer un refroidissement de la pièce.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique en coupe d'un dispositif de moulage selon un premier mode de réalisation de l'invention dans lequel la membrane est plane ;
- la figure 2, une vue schématique de dessus de la membrane du dispositif de la figure 1 ;
- la figure 3, une vue schématique de côté d'un dispositif de moulage selon un deuxième mode de réalisation de l'invention dans lequel la membrane est tubulaire ;
- la figure 4, une vue schématique de côté de la membrane de la figure 3 ;
- la figure 5, une vue schématique en coupe d'un dispositif de moulage selon un troisième mode de réalisation de l'invention ;
- la figure 6, une vue schématique en coupe d'un dispositif de moulage selon un troisième mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

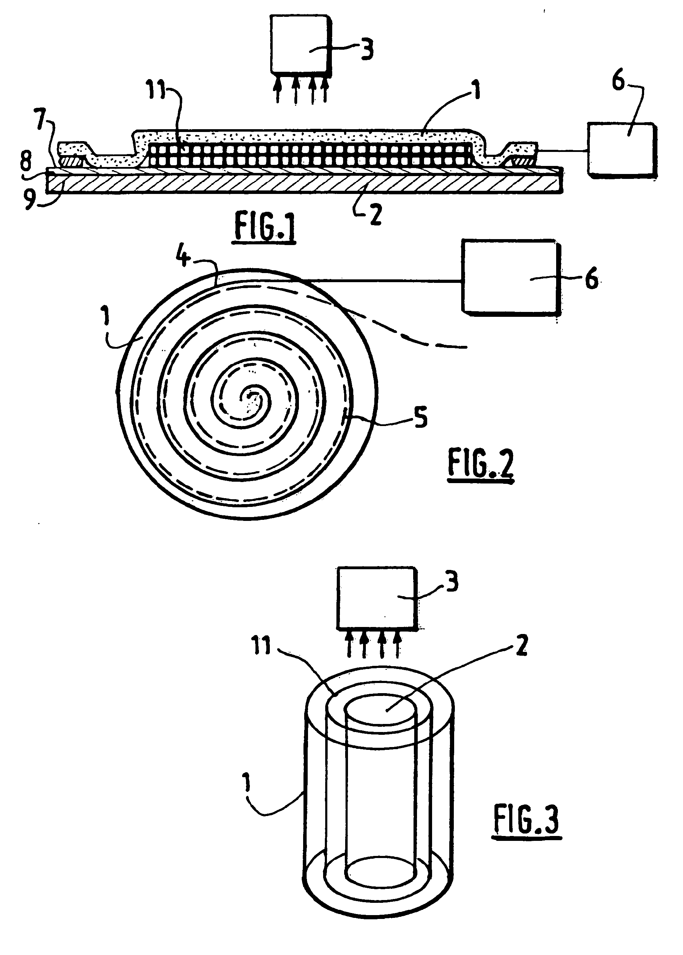

Le dispositif des figures 1 et 2 permet la fabrication d'une pièce incurvée en matériau composite qui est réalisée à partir de tissus renforcés par des fibres naturelles.

Ce dispositif comporte une membrane souple 1, une partie rigide 2, un organe d'aspiration 3 qui est ici une pompe.

La membrane souple 1 est en silicone. Dans cet exemple, elle est épaisse de 5 mm environ. Cette membrane 1 comporte un inducteur 4 qui est ici un câble de cuivre enroulé en spirale et compris dans le plan de la membrane. Ce câble de cuivre constitué de plusieurs fils a un diamètre de 2 mm et une conductibilité de 59,6×10⁸ S/m. Le câble conducteur 4 est relié à un générateur de courant alternatif 6, extérieur à la membrane. La membrane 1 comporte également un canal 5 qui forme également une spirale et dans lequel peut s'écouler un liquide de refroidissement comme de l'eau.

La partie rigide 2 comporte une surface supérieure 7 qui présente des reliefs correspondant à la forme voulue pour la pièce en matériau composite. La partie rigide 2 est revêtue d'une couche conductrice électriquement 8 en acier qui est susceptible de s'échauffer sous l'influence du champ magnétique variable produit par la membrane. Sous cette couche chauffante 8 se trouve une couche isolante 9 qui évite les déperditions thermiques. Dans ce mode de réalisation, cette couche isolante 9 est en céramique.

Le dispositif de moulage selon l'invention comporte également des moyens d'étanchéité 10 permettant d'assurer l'étanchéité entre la membrane et la partie rigide lorsque l'organe d'aspiration plaque la membrane contre la partie rigide.

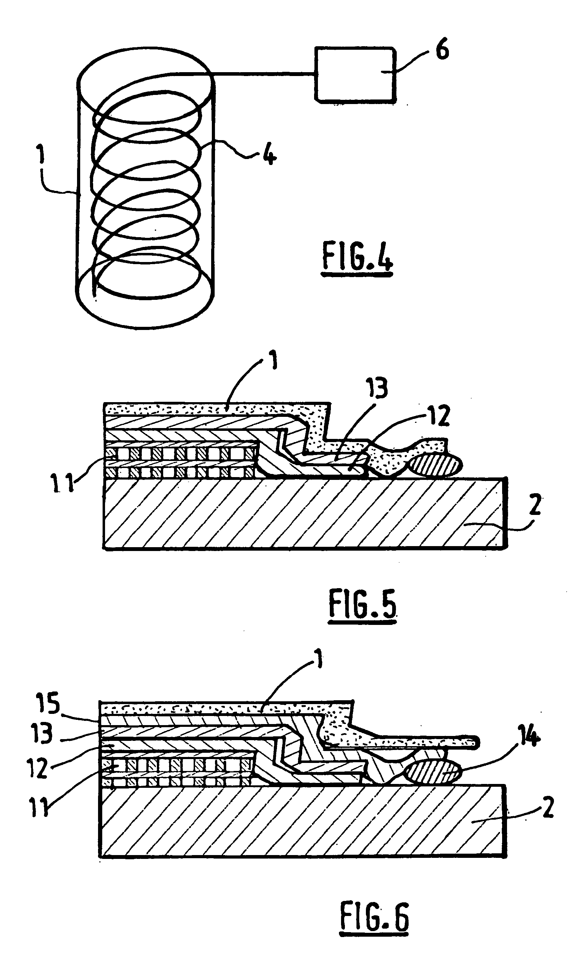

Le dispositif des figures 3 et 4 comporte également une membrane 1, une partie fixe 2 entre lesquelles le tissu à mettre en forme 11 est placé. Ce dispositif comporte également un organe d'aspiration 3 et un générateur 6 qui génère un courant alternatif.

La membrane 1 est tubulaire et elle comporte un inducteur 4 qui forme un solénoïde.

Les figures 5 et 6 représentent des parties d'un dispositif de moulage qui comporte une membrane souple 1 pourvue d'un inducteur relié à un générateur et une partie fixe 2. Dans ce dispositif de moulage se trouve une matrice 11 composée d'une pluralité de plis pré imprégné. Entre la membrane 1 et la matrice 11 se trouve différents consommables 12 et 13. Ces consommables 12, 13 peuvent être de natures différentes suivant les pré imprégnés utilisés et suivant leur température de fusion.

Dans l'exemple de réalisation de la figure 5, le consommable 12 est un film séparateur micro perforé qui assure l'état de surface de la pièce composite et qui laisse fluer l'excédent de résine à travers des micro-trous. Le consommable 13 est un feutre drainant qui permet d'absorber l'excédent de résine qui flue lors du chauffage et qui migre vers le haut par l'action de l'organe d'aspiration. Ce feutre drainant garantit également l'homogénéité de la mise sous vide. On peut également ajouter un troisième consommable : un tissu de délaminage qui permet d'augmenter la rugosité de la surface de la pièce composite afin d'obtenir une meilleure adhésion lors d'un éventuel collage subvenant par la suite.

Dans l'exemple de réalisation de la figure 6, un mastic d'étanchéité 14 est mis en place sur le contour de l'outillage. Celui-ci permet de comprimer l'empilement de la structure grâce à un film de mise sous vide ou une membrane souple 15. Dans cette configuration, la membrane inductive 1 est employée seulement comme système de chauffage et permet la montée en température de l'outillage ou du stratifié si celui-ci est conducteur au moins partiellement électriquement Cette membrane à vide peut être fabriquée dans un matériau élastique afin de pouvoir épouser la forme de l'outil de moulage lorsque le vide est appliqué.

Un procédé de fabrication d'une pièce en matériau composite mettant en oeuvre un des dispositifs de moulage des figures 1 à 6.

Dans un premier temps, un agent démoulant est appliqué sur la partie rigide. Puis le pré imprégné à mettre en forme est placé sur la partie rigide. On pourrait également utiliser un semi-imprégnés sous la forme d'un mélange, d'un enduit, d'un poudrage, d'un comélage, ou d'un film à matrice thermoplastique. Ladite matière thermoplastique peut être choisie parmi des polyethylethercetone, polyphénylène sulfone, polyéthylène mais aussi des biopolymères de type acide polylactique, polyhydroxybutyrate;

On positionne ensuite les plis de renfort du pré imprégné selon l'orientation voulue. L'orientation des plis devra être choisie en fonction des caractéristiques mécaniques prédéfinies.

Sur le pré imprégné, on installe les différents consommables dans l'ordre suivant : le tissu de délaminage, le film séparateur, le tissu absorbant et le drain. Toutefois, certains consommables ne sont pas indispensables et peuvent être éliminés selon les caractéristiques souhaitées. Les consommables employés devront avoir une température de dégradation supérieure à celle du pré imprégné afin de ne pas se dégrader pendant le chauffage.

On place ensuite la membrane souple sur l'ensemble réalisé via la mise en place d'un mastic d'étanchéité ou de tout autre moyen d'étanchéité adapté.

On applique ensuite à l'ensemble un vide suffisant grâce à l'organe d'aspiration. Le vide à obtenir est une dépression d'au moins 0.5 bars. Pour obtenir le vide entre la membrane et la partie rigide, des prises de vide sont nécessaires. Celle-ci peuvent être situées soit sur la membrane à l'aide d'une ou plusieurs sorties de vide, ou par le biais d'un ou plusieurs orifices situés dans le moule.

On active ensuite le générateur qui produit un courant alternatif, ce qui permet de créer un champ magnétique grâce à l'inducteur. Grâce à ce champ magnétique, la partie rigide chauffe et la chaleur qu'elle produit est transférée au pré imprégné par conduction. Le pré imprégné se liquéfie à sa température de fusion et enveloppe par là même la partie rigide. Le pré imprégné chauffé forme la pièce composite sur la partie rigide avec le maintien de la force engendrée par la membrane souple sur la partie rigide.

On refroidit ensuite le pré imprégné jusqu'à une température définie, par exemple 60°, par un système de jet d'air qui vient ventiler la partie supérieure du dispositif. Cette étape fixe les caractéristiques dimensionnelles et structurelles définitives de la pièce composite ainsi que son aspect final.

Le procédé de réalisation d'une pièce en matériau composite est accéléré grâce au dispositif de moulage selon l'invention. Par exemple, la réalisation d'une pièce en matériau composite à partir de quatre plis de pré imprégné en polyamide renforcé par des fibres de carbone à 250° dure trois minutes avec le dispositif de moulage selon l'invention qui est équipé d'un générateur d'une puissance de 2000 W, et qui travaille à une fréquence de 20 kHz.

## Revendications

1. Dispositif de moulage pour la réalisation de pièces en matériau composite comportant:
- une membrane déformable (1);
- une partie rigide (2);
- un moyen d'aspiration (3) permettant d'appliquer une dépression entre la membrane (1) et la partie rigide (2),
**caractérisé en ce que** :
- la membrane déformable (1) comporte au moins un inducteur (4) relié à un boîtier d'alimentation (6);
- la partie rigide (2) est au moins partiellement conductrice électriquement.

2. Dispositif de moulage selon la revendication précédente, dans lequel l'inducteur (4) est constitué par un métal dont la résistivité électrique est comprise entre 10⁻⁸ et 10⁻¹ W:m.

3. Dispositif de moulage selon l'une quelconque des revendications précédentes, dans lequel l'inducteur (4) est constitué par des conduits souples dans lesquels circule un fluide conducteur électriquement.

4. Dispositif de moulage selon l'une quelconque des revendications précédentes, **caractérisée en ce que** la membrane (1) est non développable et **en ce que** l'inducteur (4) forme une spirale comprise dans l'épaisseur de la membrane.

5. Dispositif de moulage selon l'une quelconque des revendications 1 à 3, **caractérisée en ce que** la membrane (1) est tubulaire et **en ce que** l'inducteur (4) forme un solénoïde.

6. Dispositif de moulage selon l'une quelconque des revendications précédentes, **caractérisée en ce que** la membrane (1) est élastique.

7. Dispositif de moulage selon l'une quelconque des revendications précédentes, **caractérisée en ce que** la membrane (1) comporte en outre un ou plusieurs des éléments suivants : des particules conductrices électriquement, des ferrofluides, des fluides conducteurs électriques.

8. Dispositif de moulage selon l'une quelconque des revendications précédentes, **caractérisée en ce que** la membrane comporte en outre des moyens de refroidissement (5).

9. Dispositif de moulage selon l'une quelconque des revendications précédentes, **caractérisée en ce que** seule la surface (7, 8) de la partie rigide (2) est conductrice électriquement.

10. Dispositif de moulage selon la revendication précédente, **caractérisée en ce que** la partie rigide comporte une couche isolante thermiquement (9) disposée sous la surface (8) de la partie rigide qui est conductrice électriquement

11. Dispositif de moulage selon l'une quelconque des revendications précédentes, **caractérisé en ce que** la partie rigide (2) est constituée d'un matériau magnétique.

12. Dispositif de moulage selon l'une quelconque des revendications précédentes, **caractérisé en ce que** la partie rigide est revêtue d'un matériau magnétique.

13. Dispositif de moulage selon l'une quelconque des revendications précédentes, **caractérisé en ce qu'**il comporte en outre des moyens d'étanchéité (14) permettant de garantir l'étanchéité entre la membrane (1) et la partie rigide (2) lorsque le moyen d'aspiration (3) fait le vide.

14. Dispositif de moulage selon l'une quelconque des revendications précédentes, **caractérisé en ce que** le dispositif comporte des thermocouples permettant de mesurer la température du matériau composite et un circuit d'asservissement de la fréquence du boîtier d'alimentation en fonction de la température du matériau composite.

15. Dispositif de moulage selon l'une quelconque des revendications précédentes, **caractérisé en ce qu'**il comporte des moyens pour appliquer des mouvements vibratoires à l'un au moins de ses constituants.

16. Procédé de moulage d'une pièce en matériau composite mettant en oeuvre le dispositif de moulage selon l'une quelconque des revendications précédentes, le procédé étant **caractérisé en ce qu'**il comporte les étapes suivantes :
- introduire un renfort et une matrice constituant le matériau composite dans le dispositif de moulage dans l'espace compris entre la partie rigide et la membrane souple,
- appliquer une dépression entre la membrane et la partie rigide,
- appliquer un cycle de mise en oeuvre consistant à alimenter l'inducteur grâce au boîtier d'alimentation par un courant électrique contrôlé en fréquence et en puissance.

17. Procédé de moulage selon la revendication précédente, **caractérisé en ce qu'**il comporte une étape consistant à faire évoluer la pression entre la membrane et la partie rigide pendant le cycle de mise en oeuvre.

18. Procédé selon l'une quelconque des revendications 16 ou 17, **caractérisé en ce qu'**il comporte en outre une étape consistant à appliquer une contrainte variable sur la membrane pendant le cycle de mise en oeuvre.

19. Procédé selon l'une quelconque des revendications 16 à 18, **caractérisé en ce que** la fréquence du courant électrique varie pendant le cycle de mise en oeuvre.

20. Procédé selon l'une quelconque des revendications 16 à 18, **caractérisé en ce qu'**il comporte en outre une étape de refroidissement du matériau composite variable en température.

## Claims

1. Moulding device for producing parts made from composite material, comprising:
- a deformable membrane (1);
- a rigid part (2);
- an aspiration means (3) for applying a negative pressure between the membrane (1) and the rigid part (2),
**characterised in that**:
- the deformable membrane (1) comprises at least one inductor (4) connected to a supply box (6);
- the rigid part (2) is at least partially electrically conductive.

2. Moulding device according to the preceding claim, in which the inductor (4) is formed by a metal the electrical resistivity of which is between 10⁻⁸ and 10⁻¹ W.m.

3. Moulding device according to any one of the preceding claims, in which the inductor (4) is formed by flexible conduits in which an electrically conductive fluid circulates.

4. Moulding device according to any one of the preceding claims, **characterised in that** the membrane (1) is non-developable and **in that** the inductor (4) forms a spiral included in the thickness of the membrane.

5. Moulding device according to any one of claims 1 to 3, **characterised in that** the membrane (1) is tubular and **in that** the inductor (4) forms a solenoid.

6. Moulding device according to any one of the preceding claims, **characterised in that** the membrane (1) is elastic.

7. Moulding device according to any one of the preceding claims, **characterised in that** the membrane (1) also comprises one or more of the following elements: electrically conductive particles, ferrofluids, electrically conductive fluids.

8. Moulding device according to any one of the preceding claims, **characterised in that** the membrane also comprises cooling means (5).

9. Moulding device according to any one of the preceding claims, **characterised in that** only the surface (7, 8) of the rigid part (2) is electrically conductive.

10. Moulding device according the preceding claims, **characterised in that** the rigid part comprises a thermally insulating layer (9) disposed under the surface (8) of the rigid part that is electrically conductive.

11. Moulding device according to any one of the preceding claims, **characterised in that** the rigid part (2) consists of a magnetic material.

12. Moulding device according to any one of the preceding claims, **characterised in that** the rigid part is clad with a magnetic material.

13. Moulding device according to any one of the preceding claims, **characterised in that** it also comprises sealing means (14) for guaranteeing the seal between the membrane (1) and the rigid part (2) when the aspiration means (3) forms a vacuum.

14. Moulding device according to any one of the preceding claims, **characterised in that** the device comprises thermocouples for measuring the temperature of the composite material and a circuit for controlling the frequency of the supply box depending on the temperature of the composite material.

15. Moulding device according to any one of the preceding claims, **characterised in that** it comprises means for applying vibratory movements to at least one of its constituents.

16. Method for moulding a part made from composite material using the moulding device according to any one of the preceding claims, the method being **characterised in that** it comprises the following steps:
- introducing a reinforcement and a matrix constituting the composite material in the moulding device in the space lying between the rigid part and the flexible membrane,
- applying a negative pressure between the membrane and the rigid part,
- applying an implementation cycle consisting of supplying the inductor by means of the supply box with an electric current controlled for frequency and power.

17. Method for moulding according to the preceding claim, **characterised in that** it comprises a step consisting of changing the pressure between the membrane and the rigid part during the implementation cycle.

18. Method according to either one of claims 16 or 17, **characterised in that** it also comprises a step consisting of applying a variable force to the membrane during the implementation cycle.

19. Method according to any one of claims 16 to 18, **characterised in that** the frequency of the electric current varies during the implementation cycle.

20. Method according to any one of claims 16 to 18, **characterised in that** it also comprises a step of cooling the composite material variable in temperature.

## Patentansprüche

1. Formvorrichtung zum Ausbilden von Teilen aus Verbundmaterial, umfassend:
- eine verformbare Membran (1);
- einen unbiegsamen Teil (2);
- ein Ansaugmittel (3), das es ermöglicht, einen Unterdruck zwischen der Membran (1) und dem unbiegsamen Teil (2) anzulegen;
**dadurch gekennzeichnet, dass**:
- die verformbare Membran (1) mindestens ein Feldsystem (4) umfasst, das mit einem Netzteil (6) verbunden ist;
- der unbiegsame Teil (2) mindestens teilweise elektrisch leitfähig ist.

2. Formvorrichtung nach dem vorhergehenden Anspruch, wobei das Feldsystem (4) aus einem Metall besteht, dessen elektrischer Leistungswiderstand zwischen 10⁻⁸ und 10⁻¹ W.m liegt.

3. Formvorrichtung nach einem der vorhergehenden Ansprüche, wobei das Feldsystem (4) aus biegsamen Leitungen besteht, in denen ein elektrisch leitfähiges Fluid fließt.

4. Formvorrichtung nach einem der vorhergehenden Ansprüche, **dadurch gekennzeichnet, dass** die Membran (1) nicht abwickelbar ist und dass das Feldsystem (4) eine Spirale bildet, die in der Dicke der Membran enthalten ist.

5. Formvorrichtung nach einem der Ansprüche 1 bis 3, **dadurch gekennzeichnet, dass** die Membran (1) röhrenförmig ist und dass das Feldsystem (4) ein Solenoid bildet.

6. Formvorrichtung nach einem der vorhergehenden Ansprüche, **dadurch gekennzeichnet, dass** die Membran (1) elastisch ist.

7. Formvorrichtung nach einem der vorhergehenden Ansprüche, **dadurch gekennzeichnet, dass** die Membran (1) ferner eines oder mehrere der folgenden Elemente umfasst: elektrisch leitfähige Teilchen, Ferrofluide, elektrisch leitfähige Fluide.

8. Formvorrichtung nach einem der vorhergehenden Ansprüche, **dadurch gekennzeichnet, dass** die Membran ferner Kühlmittel (5) umfasst.

9. Formvorrichtung nach einem der vorhergehenden Ansprüche, **dadurch gekennzeichnet, dass** nur die Oberfläche (7, 8) des unbiegsamen Teils (2) elektrisch leitfähig ist.

10. Formvorrichtung nach dem vorhergehenden Ansprüche, **dadurch gekennzeichnet, dass** der unbiegsame Teil eine thermisch isolierende Schicht (9) umfasst, die unter der Oberfläche (8) des unbiegsamen Teils angeordnet ist, der elektrisch leitfähig ist.

11. Formvorrichtung nach einem der vorhergehenden Ansprüche, **dadurch gekennzeichnet, dass** der unbiegsame Teil (2) aus einem magnetischen Material besteht.

12. Formvorrichtung nach einem der vorhergehenden Ansprüche, **dadurch gekennzeichnet, dass** der unbiegsame Teil mit einem Magnetmaterial beschichtet ist.

13. Formvorrichtung nach einem der vorhergehenden Ansprüche, **dadurch gekennzeichnet, dass** sie ferner Dichtungsmittel (14) umfasst, die es ermöglichen, die Dichtheit zwischen der Membran (1) und dem unbiegsamen Teil (2) zu gewährleisten, wenn das Ansaugmittel (3) das Vakuum herstellt.

14. Formvorrichtung nach einem der vorhergehenden Ansprüche, **dadurch gekennzeichnet, dass** die Vorrichtung Thermoelemente umfasst, die es ermöglichen, die Temperatur des Verbundmaterials zu messen, und eine Schaltung zur Regelung der Frequenz des Netzteils in Abhängigkeit von der Temperatur des Verbundmaterials.

15. Formvorrichtung nach einem der vorhergehenden Ansprüche, **dadurch gekennzeichnet, dass** sie Mittel zum Anlegen von Vibrationsbewegungen an mindestens eines ihrer Bestandteile umfasst.

16. Verfahren zum Formen eines Teils aus Verbundmaterial, das die Formvorrichtung nach einem der vorhergehenden Ansprüche umsetzt, wobei das Verfahren **dadurch gekennzeichnet ist, dass** es folgende Schritte umfasst:
- Einführen einer Versteifung und eines Kerns, die das Verbundmaterial bilden, in die Formvorrichtung in dem Raum zwischen dem unbiegsamen Teil und der biegsamen Membran;
- Anwenden eines Unterdrucks zwischen der Membran und dem unbiegsamen Teil,
- Anwenden eines Umsetzungszyklus, der darin besteht, das Feldsystem anhand des Netzteils mit einem elektrischen Strom zu versorgen, der frequenz- und leistungsgesteuert ist.

17. Formverfahren nach dem vorhergehenden Anspruch, **dadurch gekennzeichnet, dass** es einen Schritt umfasst, der darin besteht, den Druck zwischen der Membran und dem unbiegsamen Teil während des Umsetzungszyklus zu verändern.

18. Verfahren nach einem der Ansprüche 16 oder 17, **dadurch gekennzeichnet, dass** es ferner einen Schritt des Anwendens einer variablen Spannung auf die Membran während des Umsetzungszyklus umfasst.

19. Verfahren nach einem der Ansprüche 16 bis 18, **dadurch gekennzeichnet, dass** die Frequenz des elektrischen Stroms während des Umsetzungszyklus variiert.

20. Verfahren nach einem der Ansprüche 16 bis 18, **dadurch gekennzeichnet, dass** es ferner einen Schritt des temperaturvariablen Kühlens des Verbundmaterials umfasst.
